# EUROPEAN PATENT SPECIFICATION

(11) **EP 4 546 181 B1**
(45) Date of publication and mention of the grant of the patent: **22.04.2026**
(21) Application number: 24208109.9
(22) Date of filing: 22.10.2024
(51) Int. Cl.: G06F 21/31, H04L 9/40

(54) **ENABLING AUTHENTICATION BY A LOCAL IDENTITY PROVIDER WHEN CLOUD-BASED AUTHENTICATION IS UNAVAILABLE**
ERMÖGLICHUNG DER AUTHENTIFIZIERUNG DURCH EINEN LOKALEN IDENTITÄTSANBIETER, WENN CLOUD-BASIERTE AUTHENTIFIZIERUNG NICHT VERFÜGBAR IST
ACTIVATION D'AUTHENTIFICATION PAR UN FOURNISSEUR D'IDENTITÉ LOCAL LORSQU'UNE AUTHENTIFICATION EN NUAGE N'EST PAS DISPONIBLE

(30) Priority: 23.10.2023 US 202363545262 P
(43) Date of publication of application: 30.04.2025
(73) Proprietor: AVEVA Software, LLC, Lake Forest, CA 92630 (US)
(72) Inventor: Kareem, Nausheen, Lake Forest, 92630 (US); Ivanov, Dimitre, Lake Forest, 92630 (US); Kane, Douglas, Lake Forest, 92630 (US)
(74) Representative: WBH Wachenhausen Patentanwälte PartG mbB

(56) References cited:
- EP-A1- 4 625 216
- EP-B1- 2 761 522
- WO-A1-2022/035515
- US-A1- 2022 292 180
- US-B1- 8 689 294

## Description

### CROSS REFERENCE TO RELATED APPLICATION

This application claims priority under 35 U.S.C. § 119 or the Paris Convention from U.S. Provisional Patent Application 63/545,262, filed October 23, 2023.

### BACKGROUND

Modern industrial software applications need to be able to execute in a hybrid environment where critical control processes are executed on a local system, which may be referred to as an on-premises system, site, or facility, but the user configurations and application configurations are maintained in the cloud. After a cloud-hosted process establishes a user's identity through authentication, such a hybrid application needs to use the authenticated user identity to authorize the user's access, which may be referred to as an access level, an authorization role, or an entitlement to both on-premise and cloud resources. In such an operational environment, Human Machine Interface (HMI) and AVEVA Operations Control Products systems must be highly available. When using cloud-based authentication and/or authorization, which is valuable for centralized management and access to cloud products such as Software as a Service (SaaS), a key concern is what happens when a site loses connectivity to the cloud. Known art includes US 2022/292180 A (which describes off-line authentication and authorization with a service provider using application credentials), US 8 689 294 B1 (which describes off-line authentication for accessing a client device), WO 2022/035515 A1 (which describes off-line usage of virtualization environment) and EP 2 761 522 B1 (which describes the OAuth framework utilizing access tokens to provide scoped resource access).

An operational risk is created if operators at an isolated site can no longer login to an on-premises system due to a connectivity failure, which may be due to a loss of the on-premises system's connection to the system's network, to the Internet, to a cloud platform, and/or to cloud resources. On-premises system components must be able to continue to execute when such connections are temporarily lost, in order to continue control of mission critical applications. It is a major concern in the industry that such on-premises systems must have internet/cloud connectivity to perform user authentication and user authorization. Any loss of user authentication and/or user authorization can leave such on-premises systems as non-operational and cause safety issues and loss of production.

### BRIEF DESCRIPTION OF THE DRAWINGS

FIG. 1 illustrates an example workflow for enabling authentication by a local identity provider when cloud-based authentication is unavailable, according to embodiments.
FIG. 2 illustrates example system components and services for enabling authentication by a local identity provider when cloud-based authentication is unavailable, according to embodiments.
FIG. 3 illustrates a block diagram of an example system for enabling authentication by a local identity provider when cloud-based authentication is unavailable, according to embodiments.
FIG. 4 is a flowchart that illustrates a computer-implemented method for enabling authentication by a local identity provider when cloud-based authentication is unavailable, according to embodiments.
FIG. 5 is a block diagram illustrating an example hardware device in which the subject matter may be implemented.

### DETAILED DESCRIPTION

After a cloud identity provider successfully authenticates a user based on the user's cloud identity, an on-premises system caches the user's cloud identity. Similarly, after a cloud usage service successfully authorizes a user to access an application based on the user's subscription to the application, the on-premises system caches the user's subscription information. Consequently, when the on-premises system loses a connection with a network, internet. cloud platform, and/or cloud resource, the on-premises system can use the cached user information to provide user authentication and the user's cached subscription information to provide authorization checks and thereby maintain plant-floor operations. Embodiments of this disclosure enable reliable operations by providing fallback authentication and authorization by a local (on-premises) identity provider when cloud-based authentication is unavailable, thereby ensuring a highly available authentication and authorization capability.

In embodiments, after receiving a request to authenticate a user of a system, which is connected to a cloud's platform, the cloud's identity provider authenticates the user based on identifying the user's cloud identity from cloud identities associated with subscriptions to access an application. The cloud's usage service authorizes the cloud-authenticated user to access the application based on the subscription associated with the user's cloud identity. The system matches the user's system identity with the user's cloud identity. If the system is not connected to the cloud's platform, the system's identity provider authenticates the user based on identifying the user's system identity from system identities matched with cloud identities. The system's usage service authorizes the system-authenticated user to access the application based on the subscription associated with the cloud identity matched with the user's system identity.

For example, Sue is a supervising user for Acme Corporation, and she requests access to an AVEVA Operations Control Products system application, which requests the authentication of Sue from an on-premise's AVEVA Identity Manager, which confirms a cloud connection to the AVEVA Connect cloud identity provider. Then the on-premise's AVEVA Identity Manager conveys the authentication request to the AVEVA Connect cloud identity provider, which searches the cloud user identities and subscriptions for Acme's employees, and identifies a cloud user identity for Sue. The AVEVA Connect cloud identity provider responds by providing an AVEVA Connect access token with Sue's cloud user identity to the on-premise's AVEVA Identity Manager, which embeds the AVEVA Connect access token in its own token, and caches Sue's cloud user identity in an on-premises cache. Next, the on-premise's AVEVA Identity Manager conveys the combined tokens to the AVEVA Operations Control Products system application, which returns the combined tokens in a request to authorize Sue to access the AVEVA Operations Control Products system application, which is received by an on-premises' usage service which confirms a cloud connection to a cloud usage service.

Then the on-premise's usage service conveys the authorization request to a cloud usage service, which requests the authorization through the AVEVA Connect cloud identity provider, which searches the cloud user identities and subscription for Acme's employees, and identifies Sue's subscription to the AVEVA Operations Control Products system application. In response to the AVEVA Connect cloud identity provider providing Sue's subscription, the cloud usage service conveys Sue's subscription to the on-premise's usage service, which caches Sue's subscription in an on-premises usage cache. Next, the on-premise's AVEVA Identity Manager matches Sue's on-premise's user identity, AcmeCoDomain\SueSuper, with Sue's cloud user identity, SueSuper@AcmeCo. Since each cloud user identity is already linked with its subscription, matching a user's on-premise's user identity with the user's cloud user identities results in indirectly linking the user's on-premise's user identity with its subscriptions, such as linking AcmeCoDomain\SueSuper with Sue's subscription to access the AVEVA Operations Control Products system application to which Acme subscribes.

Continuing the example, Mary is a managing user for Acme Corporation, and she requests access to the AVEVA Operations Control Products system application, which requests the authentication of Mary from the on-premise's AVEVA Identity Manager, which determines that the cloud connection is lost to the AVEVA Connect cloud identity provider. Therefore, the on-premise's AVEVA Identity Manager searches an on-premises' Active Directory that cached cloud user identities for Acme's employees, and identifies a cloud user identity for Mary that was previously matched with the on-premises' user identify for Mary the last time that Mary used the on-premises' system when connected to the cloud. The on-premises' system gets the AVEVA Identity Manager's token which was cached, and conveys the token to the AVEVA Operations Control Products system application, which returns the token in a request to authorize Mary to access the AVEVA Operations Control Products system application, which is received by the on-premises' usage service which determines that the cloud connection is lost to the cloud usage service.

Therefore, the on-premise's usage service searches the on-premises' cache which caches Mary's subscriptions. The on-premise's AVEVA Identity Manager matched Mary's on-premise's user identity, AcmeCoDomain\MaryManager, with Mary's cloud user identity, MaryManager@AcmeCo, such that AcmeCoDomain\MaryManager is now indirectly linked with Mary's subscription to access the AVEVA Operations Control Products system application. The AVEVA Identity Manager enables Mary to access the AVEVA Operations Control Products system application even though MaryManager@AcmeCo, which is the indirect link between AcmeCoDomain\MaryManager and Mary's subscription to access the AVEVA Operations Control Products system application, is currently unavailable though the AVEVA Connect cloud identity provider.

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

Although these embodiments are described in sufficient detail to enable one skilled in the art to practice the disclosed embodiments, it is understood that these examples are not limiting, such that other embodiments may be used, and changes may be made without departing from their scope. For example, the operations of methods shown and described herein are not necessarily performed in the order indicated and may be performed in parallel. It should also be understood that the methods may include more or fewer operations than are indicated. In some embodiments, operations described herein as separate operations may be combined. Conversely, what may be described herein as a single operation may be implemented in multiple operations.

Reference in the specification to "one embodiment" or "an embodiment" or "some embodiments," means that a particular feature, structure, or characteristic described in conjunction with the embodiment may be included in at least one embodiment of the disclosure. The appearances of the phrase "an embodiment" or "the embodiment" in various places in the specification do not necessarily all refer to the same embodiment.

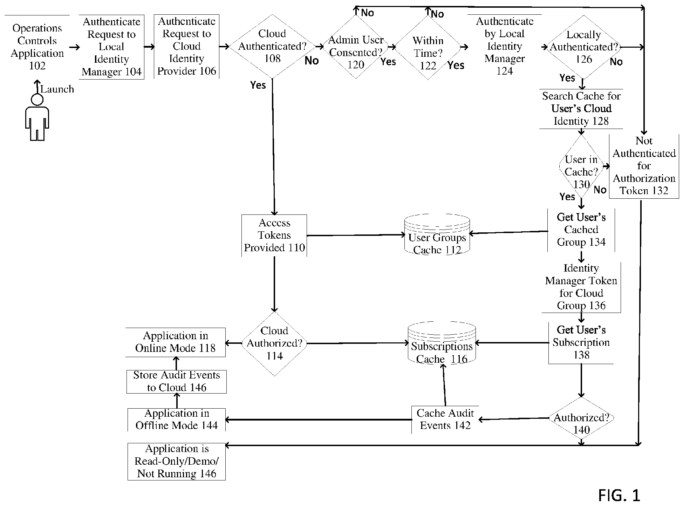

FIG. 1 illustrates an example workflow **100** for enabling authentication by a local identity provider when cloud-based authentication is unavailable, according to embodiments. The workflow **100** includes the workflow blocks **102 - 108** which summarize the common workflow of an on-premises system, the workflow blocks **110 - 118** and **148** that summarize the workflow branch when the on-premises system is connected to the cloud, and the workflow blocks **120 - 146** that summarize the workflow branch when the on-premises system is not connected to the cloud. In block **102,** a user launches an operations control application, such as the AVEVA Operations Control Products system application. Block **104** summarizes the application sending a request to authenticate the user to a local identity manager, such as an on-premises AVEVA identity manager. The local identity manager conveys the request to authenticate the user to a cloud identity provider, such as the AVEVA Connect cloud identity provider, in block **106.** Then block **108** determines if the user was cloud authenticated, which ends the common workflow and either begins the workflow branch when the on-premises system is connected to the cloud or the workflow branch when the on-premises system is not connected to the cloud.

If the system is connected by the cloud, the cloud authenticated the user, and the workflow **100** begins the workflow branch blocks **110 - 118** when the on-premises system is connected to the cloud, by continuing to block **110,** where access tokens are provided, by the cloud identity provider and the local identity manager. In block **112,** the cloud-authenticated user's cloud tokens and cloud identifier are parts of the user's cloud information that is cached locally for future local authentication when the system is not connected to the cloud. The workflow **110** resumes in block **114,** where the application sends the tokens with a request to authorize the user, which the local identity manager conveys to the cloud identity provider, which authorizes the user to access the application based on the user's subscription to the application. In block **116,** the user's subscription to the application is cached locally for future local authorization when the system is not connected to the cloud. The workflow **100** resumes by reaching one of the endpoints in block **118,** where the cloud-authenticated and authorized user has subscription-based access to the application which is in online mode.

If the system is not connected by the cloud, the cloud did not authenticate the user, and the workflow **100** begins the workflow branch blocks **120 - 146** when the on-premises system is not connected to the cloud, by continuing to block **120,** which asks whether an administrative user consented to having the user's authentication processed by a local identity manager. An administrative user is required to have provided explicit consent to enable the user's on-premises system's authentication. If an administrative user explicitly consented to having the user's authentication processed by a local identity manager, the workflow **100** continues to block **122** to determine whether the administrative user's explicit consent occurred within the allowed time. If an administrative user did not explicitly consent to having the user's authentication processed by a local identity manager, the workflow **100** proceeds to block **132,** where a conclusion is drawn that no authentication was made for an authorization token. In block **122,** the local system determines whether an administrative user's explicit consent occurred within the allowed time. The on-premises system may be enabled to authenticate the user for an allowed time after an administrative user's explicit consent for local authentication, such as 30 days after the administrative user's explicit consent.

If an administrative user's explicit consent occurred within the allowed time, the workflow **100** continues to block **124** to authenticate the request by the identity manager. If an administrative user's explicit consent did not occur within the allowed time, the workflow **100** proceeds to block **132** where a conclusion is drawn that no authentication was made for an authorization token. In block **124,** the on-premises identity manager attempts to authenticate the user. A determination is made in block **126** whether the user was authenticated locally. If the user was authenticated locally, the workflow **100** proceeds to block **128** to use the local identity authenticated for the user to search the cache for a matching cloud identity for the user.

In block **130,** a determination is made whether a matching cloud identity was found for the user in the cache. If a matching cloud identity was not found for the user in the cache, the workflow **100** continues to block **132** where a conclusion is drawn that no authentication for an authorization token would be possible. If a matching cloud identity was found for the user in the cache, the workflow **100** proceeds to block **134** where the matching cloud identity is used to get the user's cached cloud information, which is cached in any user group(s). In block **132,** a conclusion is drawn that no authentication for an authorization token would be possible, such that even if a local authentication of the user is made, the lack of a cloud identity which corresponds to the local identity from the local authentication means that there will be no access token available which corresponds to the user's cloud identity, and such an access token is required to authorize the user's access to the application. Therefore, after block **132** draws the conclusion that there will be no access token available, the workflow **100** proceeds to block **146,** where the targeted application is put in the read only/demonstration, or not running mode, which is the other endpoint for the workflow **100.**

In block **134,** the user's matching cloud identity is used to get the user's matching cloud information from the user groups cache **112,** which stores the cloud access tokens, the corresponding users' cloud identities, and any other cloud information for the user. The access token that is generated by the local identity manager is expected to have embedded a token generated by the cloud identity provider. However, the cloud identity provider may not be available for generating such a token to be embedded in the token that is being generated by the local identity manager. Therefore, in this situation, the local identity manager collects the information that the cloud identity provider would have collected for storing into the token which would have been generated by the cloud identity provider.

Therefore, in block **136** the system identifies the relevant identity provider token from the user cloud group that corresponds to the user's cloud identifier, which is the cloud token that enables the authorization of access to the targeted application. In block **138,** the cloud token is used to get the user's subscription information and any other of the user's cloud information from the subscriptions cache **116.** Block **140** summarizes using the user's subscription information to determine if the user is authorized to access the targeted application.

If the user is authorized to access the targeted application, the workflow 100 continues to block **142** where the user accesses the application and the system caches the audit events from the user's access of the application. If the user is not authorized to access the targeted application, the workflow proceeds to block **146,** where the targeted application is put in the read only/demonstration, or not running mode, which is one of the endpoints for the workflow **100.** After caching the audit events in block **142,** while waiting for the connection to the cloud to be restored, the application is in offline mode, as summarized in block **144.** When the connection is restored, the audit events are stored to the cloud in block **146,** and the workflow **100** reaches one of the endpoints in block **118,** where the cloud-authenticated and authorized user has subscription-based access to the application which is in online mode.

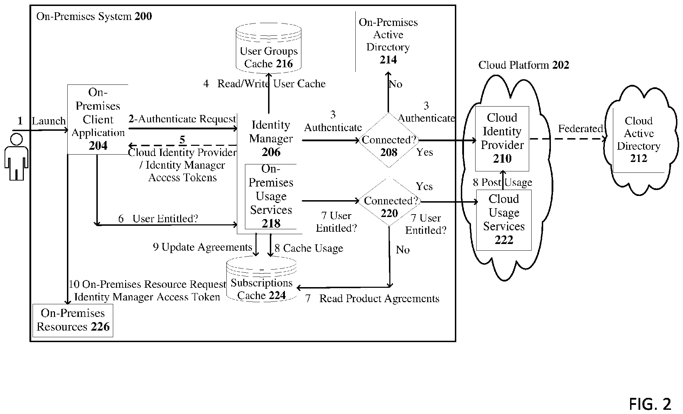

FIG. 2 illustrates example system components and services for enabling authentication by a local identity provider when cloud-based authentication is unavailable, according to embodiments. An on-premises system **200** and a cloud platform **202** communicate with each other and include various components and services that participate in interactions that provide cloud authentication and authorization when the on-premises system **200** is connected to the cloud platform **202** and enable local authentication and authorization when the on-premises system **200** is not connected to the cloud platform **202.** A user **1** launches an on-premises client application **204,** which may be the AVEVA Operations Control Products system application, or other AVEVA applications such as InTouch, System Platform, and MES. The on-premises client application **204** sends a **2** authentication request on behalf of the user to an identity manager **206,** which may be an AVEVA identity manager.

If the on-premises system **202** is connected **208** to the cloud platform **204,** the identity manager **206** redirects the **3** authentication request to the cloud identity provider **210,** which may be the AVEVA Connect cloud identity provider, which authenticates the user against the cloud active directory **212.** If the **3** authentication is successful, the identity manager **206** receives access tokens from the cloud identity provider **210.** If the on-premises system **200** is not connected **208** to the cloud platform **202,** the identity manager **206** authenticates the user against the on-premises active directory **214.** If the user was authenticated by the cloud identity provider **210** against the cloud active directory **212,** the identity manager **206 4** writes the user's cloud information to the user groups cache **216.** If the user was authenticated against the on-premises active directory **214,** the identity manager **206** matches the user's local identity to the user's cloud identity (by email or "onprem_sid" property) and reads the user's cloud information from the users groups cache **216.**

The identity manager **206** returns **5** cloud identity provider / identity manager access tokens to the on-premises client application **204.** If the user was authenticated by the cloud identity provider **210** against the cloud active directory **212,** the identity manager token has an embedded cloud identity provider token. If the user was authenticated against the on-premises active directory **214,** the identity manager token does not have an embedded cloud identity provider token.

The access token that is generated by the local identity manager **206** is expected to have embedded a token generated by the cloud identity provider **210.** However, the cloud identity provider **210** may not be available for generating such a token to be embedded in the token that is being generated by the local identity manager **206.** Therefore, in this situation, the local identity manager **206** collects the information that the cloud identity provider **210** would have collected for storing into the token which would have generated by the cloud identity provider **210.**

The on-premises client application **204** determines whether the user is authorized to access the on-premises client application **204** by calling a **6** *User Entitled* ? application programming interface (API) of an on-premises usage service **218,** and passing the user's access token. If the on-premises system **200** is connected **220** to the cloud platform **202,** and if a cloud identity provider token is embedded in the identity manager token, then the on-premises usage service **218** calls the cloud usage service **222** to authorize the user by responding to **7** *User Entitled* ? application programming interface. If the on-premises system **200** is not connected **220** to the cloud platform **202,** or if a cloud identity provider token is not embedded in the identity manager token, then the on- premises usage service **218 7** reads product agreements from the subscriptions cache **224** and determines if the user's account has a valid subscription to the on-premises client application **204** and therefore if the user is entitled to access the on-premises client application **204.**

If the on-premises system **200** is connected **220** to the cloud platform **202,** and if a cloud identity provider token is embedded in the identity manager token, then the cloud usage service **222** posts **8** usage of the on-premises client application **204** by the cloud-authorized user to the cloud identity provider **210.** If the on-premises system **200** is not connected **220** to the cloud platform **202,** or if a cloud identity provider token is not embedded in the identity manager token, then the then the on-premises usage service **218** caches **8** usage of the on-premises client application **204** by the locally-authorized user to the subscriptions cache **224,** so that when the on-premises system **200** is reconnected **220** to the cloud platform **202,** this usage can be submitted to the cloud usage service **222** which posts **8** usage of the on-premises client application **204** by the locally-authorized user to the cloud identity provider **210.** The on-premises system **200** will cache all on-premises system's authorization checks of users until connectivity to the cloud platform **202** is restored, and then will store the on-premises system's authorization checks of users to the cloud usage service **222** and/or the cloud identity provider **210.**

If the cloud usage service **222** used the cloud identity provider **210** to authorize the user, which may be referred to as an entitlement validation or check, in a successful response to **7** *User Entitled* ? application programming interface, the on-premises usage service **218 9** updates agreements in the subscriptions cache **224.** The on-premises client application **204** can make **10** on-premises resource requests by passing the access token from the identity manager **206** to on-premises resources **226.**

The on-premises client application **204** may be any configuration or runtime application launched by the user, such as App Server IDE, Window Maker, Window Viewer, OMI Viewer, Edge IDE, etc. Upon being launched by a user in the AVEVA Operations Control connected experience mode, the on-premises client application **204** requires that the user be authenticated. If the user had already been authenticated on the device hosting the on-premises client application **204,** the user will not be asked to login for authentication. Upon successful authentication with the AVEVA Connect cloud identity provider **210,** the on-premises client application **204** receives access and refresh tokens from the AVEVA identity manager **206,** which generates an access token that embeds an access token generated by the AVEVA Connect cloud identity provider **210.** Upon successful local authentication by the AVEVA identity manager **206,** the on-premises client application **204** receives access and refresh tokens from the AVEVA identity manager **206,** which generates an access token which does not embed an access token generated by the AVEVA Connect cloud identity provider **210.**

The on-premises client application **204** periodically calls the AVEVA identity manager **206** to refresh the access tokens. The on-premises client application **204** displays information such as a user profile, authentication and connection status, application connectivity to both the AVEVA identity manager **206** and the AVEVA Connect cloud identity provider **210,** application connectivity to only the AVEVA identity manager **206,** and/or application disconnected from the AVEVA identity manager **206.**

The AVEVA identity manager **206** is the local identity provider for all on-premises products, and federates user authentication with the AVEVA Connect cloud identity provider **210.** Upon successful user authentication with the AVEVA Connect cloud identity provider **210,** the AVEVA identity manager **206** generates access tokens which it returns to registered clients, which embed an access token generated by the AVEVA Connect cloud identity provider **210.** Upon successful user authentication with the AVEVA Connect cloud identity provider **210,** the AVEVA identity manager **206** caches the on-premise user's configuration from the AVEVA Connect cloud identity provider **210.** Upon successful on-premises user authentication, the AVEVA identity manager **206** generates access token which do not embed an access token generated by the AVEVA Connect cloud identity provider **210,** which it returns to registered clients.

The on-premises usage service **218** is hosted by the AVEVA identity manager **206,** and is responsible for validating entitlement for logged in user's account by using a *User Entitled*? application programming interface which calls the cloud usage service **222** to authorize the user to access the on-premises client application **204.** The on-premises usage service **218** caches account subscription information and entitlement audit events locally when disconnected from the cloud usage service **222,** and then when reconnected forwards this cached information to the cloud usage service **222.** The cloud usage service **222** exposes APIs to enable entitlement validation for logged in user's account, and to enable reporting of product usage by a user. Similarly, the AVEVA Connect cloud identity provider **210** exposes API's for user management and role/ group membership.

The AVEVA Connect cloud identity provider **210** must have authenticated a user at least once for the AVEVA identity manager **206** to have subsequently cached the user's information to the on-premises user groups cache **216** so that the on-premises system **200** will have the cached user information required to locally authenticate the user. If the AVEVA Connect cloud identity provider **210** has not authenticated a user at least once, then the AVEVA identity manager **206** would not have subsequently cached the user's cloud information to the on-premises user groups cache **216.** Consequently, the on-premises system **200** would not have the user information required to locally authenticate and/or authorize the user, unless a system administrator accesses the cloud platform **202,** creates a copy of the user's cloud information, and manually transfers the copy of the user's cloud information to the on-premises user groups cache **216.** Such a manual transfer of the user's cloud information may be referred to as being accomplished by "sneakernet," which implies that the system administrator was wearing sneakers while manually transferring the copy of the user's cloud information. Similarly, the copy of the user's cloud information may be referred to as being conveyed through a flex portal to be sent to the AVEVA identity manager **206,** implying that the system administrator was being flexible in implementing a process that transfers a copy of the user's cloud information from the cloud platform **202** to the on-premises system **200.**

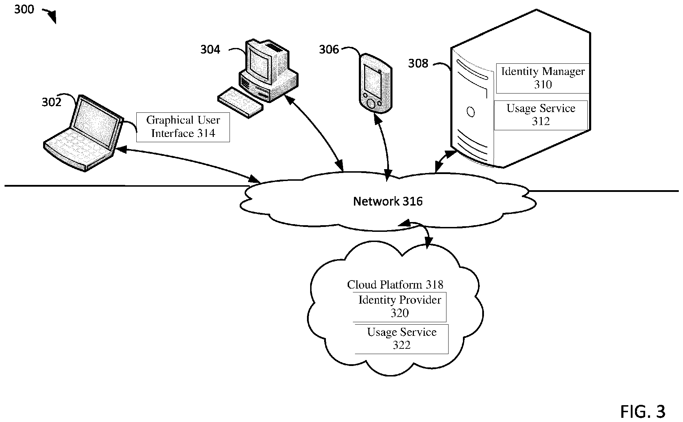

FIG. 3 illustrates a block diagram of an example system **300** for enabling authentication by a local identity provider when cloud-based authentication is unavailable, according to embodiments. As shown in FIG. **3****,** the system **300** may illustrate a cloud computing environment in which data, applications, services, and other resources are stored and delivered through shared data centers and appear as a single point of access for the users. The system **300** may also represent any other type of distributed computer network environment in which servers control the storage and distribution of resources and services for different client users.

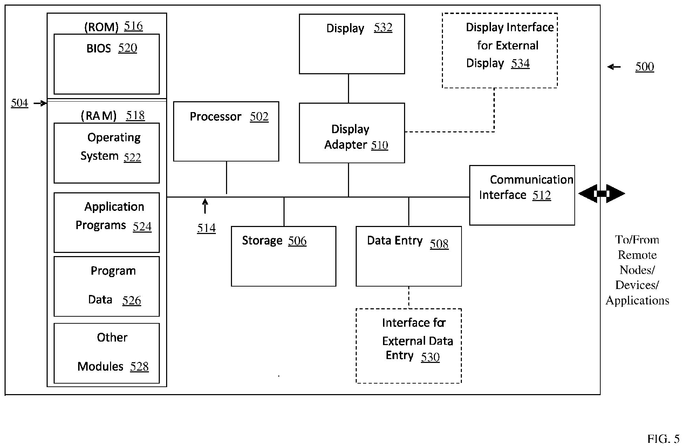

In an embodiment, the system **300** represents a cloud computing system that includes a first client **302,** a second client **304,** a third client **306,** and a server **308** that may be provided by a hosting company. Even though FIG. **3** depicts the first client **302** as a laptop computer **302,** the second client **304** as a desktop computer **304,** and the third client **306** as a smart phone **306,** each of the system components **302 - 308** may be any type of computer system, and may each be substantially similar to the hardware device **500** depicted in FIG. **5** and described below. The server **308** can host and execute an identity manager **310,** which may be an AVEVA identity manager **310,** and a usage service **312,** which may be accessed via a graphical user interface **314,** which may reside on any of the clients **302** - **306.** Although FIG. **3** depicts both the identity manager **310** and the usage service **312** residing completely on the server **308,** any or all of the identity manager **310** and the usage service **312** may reside completely on the clients **302 - 306,** or in any combination of partially on the clients **302 - 306,** partially the server **308,** and/or partially on another server which is not depicted in FIG. **3****.**

The clients **302 - 306** and the server **308** communicate via a network **316** with a cloud platform **318,** which can host and execute an identity provider **320,** which may be an AVEVA Connect cloud identity provider **320,** and a usage service **322,** which may be accessed via the graphical user interface **314.** FIG. **3** depicts the system **300** with three clients **302 - 306,** one server **308,** one identity manager **310,** one usage service **312,** one graphical user interface **314,** and one network **316,** and the cloud platform **318** with one identity provider **320** and one usage service **322.** However, the system **300** may include any number of clients **302 - 306,** any number of server **308,** any number of identity manager **310,** any number of usage service **312,** any number of graphical user interface **314,** and any number of network **316,** while the cloud platform **318** may include any number of identity provider **320** and any number of usage service **322.**

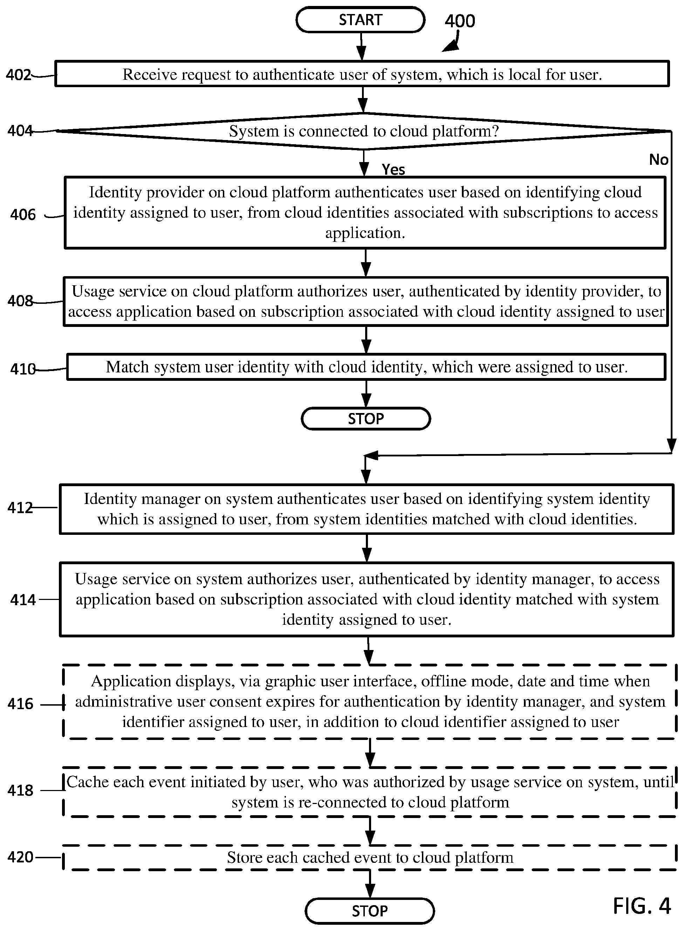

FIG. **4** is a flowchart that illustrates a computer-implemented method for enabling authentication by a local identity provider when cloud-based authentication is unavailable, according to embodiments. Flowchart **400** depicts method acts illustrated as flowchart blocks for certain actions involved in and/or between the system elements **302 - 322** of FIG. 3.

A request is received to authenticate a user of a system which is local to the user, block **402.** The system receives requests to authenticate the identities of local users. For example, and without limitation, this can include the on-premise's AVEVA identity manager **310** receiving an authentication request from an AVEVA Operations Control Products system application, which is conveying a request to authenticate Sue, who is a supervising user for Acme Corporation, which has a subscription to the AVEVA Operations Control Products system application. A request can be a message originated by a client to ask for information to be sent or an action to be performed. A user can be a person who operates a computer. A system can be a combination of hardware, software, and data that work together to perform specific tasks. Local can be accessible without a network.

After receiving a request to authenticate a user of a local system, a determination is made whether the local system is connected to a cloud platform, block **404.** The system determines whether cloud resources are available to respond to a request to authenticate the identity of a user. By way of example and without limitation, this can include the on-premise's AVEVA identity manager **310** determining whether the on-premises system **300** has a cloud connection to the AVEVA Connect cloud identity provider **320.** A cloud platform can be a collection of servers in a data center that provide computing services to remote customers.

If the local system is connected to a cloud platform, the flowchart **400** continues to block **406** to authenticate the user on the cloud. If the local system is not connected to a cloud platform, the flowchart **400** continues to block **412** to authenticate the user locally.

If the local system is connected to a cloud platform, an identity provider on the cloud platform authenticates the user based on identifying a cloud identity assigned to the user, from cloud identities associated with subscriptions to access an application, block **406.** The system uses cloud authentication to determine the identity of a user if cloud authentication is available. In embodiments, this can include the AVEVA Connect cloud identity provider **320** receiving the request to authenticate Sue from the on-premise's AVEVA identity manager **310,** searching the cloud user identities and subscriptions for Acme's employees, and identifying a cloud user identity for Sue.

An identity provider can be a source of unique representations of specific people within a collection of remote computers. A cloud identity can be a unique representation of a specific person within a collection of remote computers. A subscription can be a payment model where a user pays a recurring fee to access a product or service for a set period of time. An application can be a software program that helps users perform specific tasks.

Authenticating a user may include providing an access token to an application. For example, the AVEVA Connect cloud identity provider **320** responds to a request to authenticate Sue by providing an AVEVA Connect access token with Sue's cloud information, including her user identity, to the on-premise's AVEVA identity manager **310,** which embeds the AVEVA Connect access token in its own token, caches Sue's cloud user identity and her other cloud information in an on-premises cache, and conveys the combined tokens to the AVEVA Operations Control Products application. An access token can be a digital credential that verifies a user's identity and authorizes the user's permissions to view, store, and retrieve resources in a computer system.

A subscription may be based on a user having an individual account and/or a group account subscribed to a product agreement. For example, Sue is a member of a group of supervisors who are subscribed to have supervisor access to the AVEVA Operations Control Products system application. An individual account can be a collection of settings and permissions that are specific to a computer user. A group account can be a collection of computer users, which enables administrators to grant permissions and rights to users simultaneously. A product agreement can be a legal document that outlines the terms and conditions of a transaction between a licensor and a licensee.

Following the authentication of a user by an identity provider, a usage service on a cloud platform authorizes the user to access an application based on the subscription associated with the cloud identity assigned to the user, block **408.** The system uses cloud authorization to determine the level of access that an authenticated user has to an application if cloud authorization is available. Authorizing a user to access an application may be based on the application providing an access token. For example, and without limitation, this can include the AVEVA Operations Control Products application returning combined tokens in a request to authorize Sue to access the AVEVA Operations Control Products application, which is received by an on-premises' usage service **312** which confirms a cloud connection to a cloud usage service **322.** Then the on-premise's usage service **312** conveys the authorization request to the cloud usage service **322,** which requests the authorization through the AVEVA Connect cloud identity provider **320,** which searches the cloud user identities and subscription information for Acme's employees, and identifies Sue's subscription to the AVEVA Operations Control Products system application. In response to the AVEVA Connect cloud identity provider **320** providing Sue's subscription information, the cloud usage service **322** conveys Sue's subscription information to the on-premise's usage service **312,** which caches Sue's subscription information in an on-premises subscription cache. A usage service can be software that performs automated tasks on behalf of humans interacting with a computer.

Having authorized and authenticated a user on the cloud, a system user identity is matched with a cloud identity, which were assigned to the user, block **410.** The system matches users' local and cloud identities to enable local authentication and authorization if cloud authentication and authorization are not available. By way of example and without limitation, this can include the on-premise's AVEVA identity manager **310** matching Sue's on-premise's user identity, AcmeCoDomain\SueSuper, with Sue's cloud user identity, SueSuper@AcmeCo. Since each cloud user identity is already linked with its subscription information, matching a user's on-premise's user identity with the user's cloud user identity results in indirectly linking the user's on-premise's user identity with its subscription information, such as linking AcmeCoDomain\SueSuper with Sue's subscription to access the AVEVA Operations Control Products system application to which Acme subscribes. Then the flowchart 400 terminates. A system user identify can be a unique representation of a specific person, which is within a local computer.

If a local system is not connected to a cloud platform, an identity manager on the local system authenticates a user based on identifying a system identity which is assigned to the user, from system identities matched with cloud identities, block **412.** The system uses local authentication to determine the identity of a user if cloud authentication is not available. In embodiments, this can include the on-premise's AVEVA identity manager **310** receiving an authentication request from an AVEVA Operations Control Products system application, which is conveying a request to authenticate Mary, who is a managing user for Acme Corporation, and determining that the on-premises system does not have a cloud connection to the AVEVA Connect cloud identity provider **320.** Therefore, the on-premise's AVEVA identity manager **310** searches an on-premises' Active Directory that cached cloud user identities for Acme's employees, and identifies a cloud user identity for Mary that was previously matched with the on-premises' user identify for Mary the last time that Mary used the on-premises' system when connected to the cloud. The on-premises' system **300** gets the AVEVA Identity Manager's token which was cached, and conveys the token to the AVEVA Operations Control Products system application. An identity manager can be a processor of unique representations of specific people, which are within a local computer. A system identity can be a unique representation of a specific person, which is within a local computer.

An identity manager authenticating a user may be based on having received prior consent from an administrative user to be authenticated by the identity manager, and the identity manager authenticating the user within an allowed time. For example, Ann Administrator gave her explicit consent for Mary Manager to be authenticated by the on-premise's AVEVA identity manager **310** when the connection is lost to the AVEVA Connect cloud identity provider **320,** and Ann Administrator provided this consent a week ago, which is within the one-month consent expiration time. Prior consent can be permission for something to happen which is granted in advance by a person who operates a computer. An allowed time can be a measure of weeks, days, hours and/or minutes permitted to complete a task.

After a user is authenticated by an identity manager, a usage service on a local system authorizes the user to access an application based on the subscription associated with the cloud identity matched with the system identity assigned to the user, block **414.** The system uses local authorization to determine the level of access that an authenticated user has to an application if cloud authorization is not available. For example, and without limitation, this can include the AVEVA Operations Control Products system application returning a token in a request to authorize Mary to access the AVEVA Operations Control Products system application, which is received by the on-premises' usage service **312,** which determines that the cloud connection is lost to the cloud usage service **322.** Therefore, the on-premise's usage service **312** searches the on-premises' subscription cache which caches Mary's subscription information. The on-premise's AVEVA identity manager **310** matched Mary's on-premise's user identity, AcmeCoDomain\MaryManager, with Mary's cloud user identity, MaryManager@AcmeCo, such that AcmeCoDomain\MaryManager is already indirectly linked with Mary's subscription to access the AVEVA Operations Control Products system application. The AVEVA identity manager 310 enables Mary to access the AVEVA Operations Control Products system application even though MaryManager@AcmeCo, which is the indirect link between AcmeCoDomain\@AcmeCo and Mary's subscription to access the AVEVA Operations Control Products system application, is currently unavailable though the AVEVA Connect cloud identity provider **320.**

An example of a data structure used for matching or mapping is illustrated by the table below, which depicts columns that are labeled as Local ID for the on-premise system's local user identities, AVEVA ID for the cloud user identities, and Entitlements for the subscriptions or authorization roles. However, a person having ordinary skill in the art will appreciate that there are many different types of data structures that can retain and enable access to such matching or mapping information.

| Local ID | AVEVA ID | Entitlements |
|---|---|---|
| AcmeCoDomain\SueSuper | SueSuper@AcmeCo | AVEVA Operations Control Products system application/ supervisor level access |
| AcmeCoDomain\MaryManager | MaryManager@AcmeCo | AVEVA Operations Control Products system application/ manager level access |
| ... | ... | ... |

Following the authentication of a user, an application optionally displays, via a graphical user interface, an offline mode, a date and a time when an administrative user's consent expires for an authentication by an identity manager, and a system identifier assigned to the user, in addition to a cloud identifier assigned to the user, block **416.** The system displays information about whether a user was authenticated and authorized on the cloud or locally. By way of example and without limitation, this can include the graphical user interface **314** displaying that Mary is currently accessing the AVEVA Operations Control Products system application in an offline mode, her local user identity AcmeCoDomain\MaryManager, her cloud user identity MaryManager@AcmeCo, and the three and a half weeks remaining before Ann Administrator's consent for Mary Manager to be authenticated locally will expire. An on-premises client application can use the graphical user interface **314** to display information such as a user profile, authentication and connection status, application connectivity to both the AVEVA identity manager **310** and the AVEVA Connect cloud identity provider **320,** application connectivity to only the AVEVA identity manager **310,** and/or application disconnected from the AVEVA identity manager **310.**

A graphical user interface can be a way for humans to interact with a device through visual elements such as buttons, menus, and icons. An offline mode can be a feature that enables users to access certain functionalities of a software application without an internet connection. A date can be the day of the month or year as specified by a number. A time can be a chronological measurement in hours and minutes, possibly in reference to midnight or noon. A user consent can be permission granted by a person who operates a computer for something to happen. An authentication can be a process that verifies the identity of a user, often before granting access to an information system.

Having authorized a user by a usage service on a local system, each event initiated by the user is optionally cached until the local system is re-connected to a cloud platform, block **418.** The system caches a user's locally authorized access to update the history of cloud authorized access when the cloud authorization is available again. In embodiments, this can include the AVEVA identity manager **310** caching a record of Mary's actions accessing the AVEVA Operations Control Products system application that would have been recorded on the cloud for audit purposes if the cloud was available. An event can be an action or occurrence which is triggered by a user, and which a software system recognizes.

After each event initiated by a user is cached, each cached event is optionally stored to a cloud platform, block **420.** The system updates the history of cloud authorized access with locally authorized access which occurred when cloud authorization was not available. For example, and without limitation, this can include the AVEVA identity manager **310** transferring a record of Mary's actions accessing the AVEVA Operations Control Products system application, which would have already been recorded on the cloud for audit purposes, and a record of authorizing a user when the cloud becomes available again. A cached event can be an action or occurrence which is triggered by a user, and which a software system recognizes and records.

Although FIG. **4** depicts the blocks **402 - 420** occurring in a specific order, the blocks **402 - 420** can occur in another order. In other implementations, each of the blocks **402 - 420** can also be executed in combination with other blocks and/or some blocks may be divided into a different set of blocks.

An exemplary hardware device in which the subject matter may be implemented shall be described. Those of ordinary skill in the art will appreciate that the elements illustrated in FIG. 5 can vary depending on the system implementation. With reference to FIG. **5****,** an exemplary system for implementing the subject matter disclosed herein includes a hardware device **500,** including a processing unit **502,** a memory **504,** a storage **506,** a data entry module **508,** a display adapter **510,** a communication interface **512,** and a bus **514** that couples elements **504 - 512** to the processing unit **502.**

The bus **514** can comprise any type of bus architecture. Examples include a memory bus, a peripheral bus, a local bus, etc. The processing unit **502** is an instruction execution machine, apparatus, or device and can comprise a microprocessor, a digital signal processor, a graphics processing unit, an application specific integrated circuit (ASIC), a field programmable gate array (FPGA), etc. The processing unit **502** may be configured to execute program instructions stored in the memory **504** and/or the storage **506** and/or received via the data entry module **508.**

The memory **504** can include a read only memory (ROM) **516** and a random-access memory (RAM) **518.** The memory **504** may be configured to store program instructions and data during operation of the hardware device **500.** In various embodiments, the memory **504** can include any of a variety of memory technologies such as static random-access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example.

The memory **504** can also include nonvolatile memory technologies such as nonvolatile flash RAM (NVRAM) or ROM. In some embodiments, it is contemplated that the memory **504** can include a combination of technologies such as the foregoing, as well as other technologies not specifically mentioned. When the subject matter is implemented in a computer system, a basic input/output system (BIOS) **520,** containing the basic routines that help to transfer information between elements within the computer system, such as during start-up, is stored in the ROM **516.**

The storage **506** can include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device **500.**

It is noted that the methods described herein may be embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like can also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high-definition DVD (HD-DVD^{™}), a BLU-RAY disc; and the like.

A number of program modules may be stored on the storage **506,** the ROM **516** or the RAM **518,** including an operating system **522,** one or more applications programs **526,** program data **526,** and other program modules **528.** A user can enter commands and information into the hardware device **500** through data entry module **508.** The data entry module **508** can include mechanisms such as a keyboard, a touch screen, a pointing device, etc.

Other external input devices (not shown) are connected to the hardware device 500 via an external data entry interface **510.** By way of example and not limitation, external input devices can include a microphone, joystick, game pad, satellite dish, scanner, or the like. In some embodiments, external input devices can include video or audio input devices such as a video camera, a still camera, etc. The data entry module **508** may be configured to receive input from one or more users of the hardware device **500** and to deliver such input to the processing unit **502** and/or the memory **504** via the bus **514.**

A display **512** is also connected to the bus **514** via the display adapter **510.** The display **512** may be configured to display output of the hardware device **500** to one or more users. In some embodiments, a given device such as a touch screen, for example, can function as both the data entry module **508** and the display **512.** External display devices can also be connected to the bus **514** via the external display interface **534.** Other peripheral output devices, not shown, such as speakers and printers, may be connected to the hardware device **500.**

The hardware device **500** can operate in a networked environment using logical connections to one or more remote nodes (not shown) via the communication interface **512.** The remote node may be another computer, a server, a router, a peer device or other common network node, and typically includes many or all of the elements described above relative to the hardware device **500.** The communication interface **512** can interface with a wireless network and/or a wired network. Examples of wireless networks include, for example, a BLUETOOTH network, a wireless personal area network, a wireless 802. 21 local area network (LAN), and/or wireless telephony network (e.g., a cellular, PCS, or GSM network).

Examples of wired networks include, for example, a LAN, a fiber optic network, a wired personal area network, a telephony network, and/or a wide area network (WAN). Such networking environments are commonplace in intranets, the Internet, offices, enterpri se-wide computer networks and the like. In some embodiments, the communication interface **512** can include logic configured to support direct memory access (DMA) transfers between the memory **504** and other devices.

In a networked environment, program modules depicted relative to the hardware device **500,** or portions thereof, may be stored in a remote storage device, such as, for example, on a server. It will be appreciated that other hardware and/or software to establish a communications link between the hardware device **500** and other devices may be used.

It should be understood that the arrangement of the hardware device **500** illustrated in FIG. **5** is but one potential implementation and that other arrangements are feasible. It should also be understood that the various system components (and means) defined by the claims, described below, and illustrated in the various block diagrams represent logical components that are configured to perform the functionality described herein. For example, one or more of these system components (and means) may be realized, in whole or in part, by at least some of the components illustrated in the arrangement of the hardware device **500.**

In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. **5****.**

Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the descriptions above, the subject matter is described with reference to acts and symbolic representations of operations that are performed by one or more devices, unless indicated otherwise. As such, it is understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is described in a context, it is not meant to be limiting as those of skill in the art will appreciate that various of the acts and operations described hereinafter can also be implemented in hardware.

To facilitate an understanding of the subject matter described above, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A system for enabling authentication by a local identity provider when cloud-based authentication is unavailable, the system comprising:
one or more processors; and
a non-transitory computer readable medium storing a plurality of instructions, which when executed, cause the one or more processors to:
determine whether a system, which is local for a user, is connected to a cloud platform, in response to receiving a request to authenticate the user;
authenticate, by an identity provider on the cloud platform, the user based on identifying a cloud identity assigned to the user, from a plurality of cloud identities associated with subscriptions to access an application, in response to a determination that the system is connected to the cloud platform;
authorize, by a usage service on the cloud platform, the user, authenticated by the identity provider, to access the application based on one of the subscriptions associated with the cloud identity assigned to the user;
match a system user identity with the cloud identity, which were assigned to the user;
authenticate, by an identity manager on the system, the user based on identifying a system identity which is assigned to the user, from multiple system identities matched with multiple cloud identities, in response to a determination that the system is not connected to the cloud platform; and
authorize, by a usage service on the system, the user, authenticated by the identity manager, to access the application based on one of multiple subscriptions associated with one of the multiple cloud identities matched with the system identity assigned to the user.

2. The system of claim 1, wherein authenticating the user further comprises providing an access token to the application, and authorizing the user to access the application is further based on the application providing the access token.

3. The system of claim 1, wherein each subscription is based on the user having at least one of an individual account or a group account subscribed to a product agreement.

4. The system of claim 1, wherein the identity manager authenticating the user is further based on having received prior consent from an administrative user for the user to be authenticated by the identity manager.

5. The system of claim 4, wherein the identity manager authenticating the user is additionally based on the identity manager authenticating the user within an allowed time.

6. The system of claim 1, wherein the plurality of instructions further causes the processor to display, via a graphical user interface associated with the application, an offline mode, a date and time when an administrative user consent expires for authentication by the identity provider, and the system identifier assigned to the user, in addition to the cloud identifier assigned to the user.

7. The system of claim 1. wherein the plurality of instructions further causes the processor to:
cache each event initiated by the user, who was authorized by the usage service on the system, until the system is re-connected to the cloud platform, and
store each cached event to the cloud platform.

8. A computer-implemented method for enabling authentication by a local identity provider when cloud-based authentication is unavailable, the computer-implemented method comprising:
determining whether a system, which is local for a user, is connected to a cloud platform, in response to receiving a request to authenticate the user;
authenticating, by an identity provider on the cloud platform, the user based on identifying a cloud identity assigned to the user, from a plurality of cloud identities associated with subscriptions to access an application, in response to a determination that the system is connected to the cloud platform;
authorizing, by a usage service on the cloud platform, the user, authenticated by the identity provider, to access the application based on one of the subscriptions associated with the cloud identity assigned to the user;
matching a system user identity with the cloud identity, which were assigned to the user;
authenticating, by an identity manager on the system, the user based on identifying a system identity which is assigned to the user, from multiple system identities matched with multiple cloud identities, in response to a determination that the system is not connected to the cloud platform; and
authorizing, by a usage service on the system, the user, authenticated by the identity manager, to access the application based on one of multiple subscriptions associated with one of the multiple cloud identities matched with the system identity assigned to the user.

9. The computer-implemented method of claim 8, wherein authenticating the user further comprises providing an access token to the application, and authorizing the user to access the application is further based on the application providing the access token.

10. The computer-implemented method of claim 8, wherein each subscription is based on the user having at least one of an individual account or a group account subscribed to a product agreement.

11. The computer-implemented method of claim 8, wherein the identity manager authenticating the user is further based on having received prior consent from an administrative user for the user to be authenticated by the identity manager.

12. The computer-implemented method of claim 11, wherein the identity manager authenticating the user is additionally based on the identity manager authenticating the user within an allowed time.

13. The computer-implemented method of claim 8, wherein the computer-implemented method further comprises displaying, via a graphical user interface associated with the application, an offline mode, a date and time when an administrative user consent expires for authentication by the identity provider, and the system identifier assigned to the user, in addition to the cloud identifier assigned to the user.

14. The computer-implemented method of claim 8, wherein the computer-implemented method further comprises:
caching each event initiated by the user, who was authorized by the usage service on the system, until the system is re-connected to the cloud platform, and
storing each cached event to the cloud platform.

15. A computer program product, comprising a non-transitory computer-readable medium having a computer-readable program code embodied therein to be executed by one or more processors, the program code including instructions to:
determine whether a system, which is local for a user, is connected to a cloud platform, in response to receiving a request to authenticate the user;
authenticate, by an identity provider on the cloud platform, the user based on identifying a cloud identity assigned to the user, from a plurality of cloud identities associated with subscriptions to access an application, in response to a determination that the system is connected to the cloud platform;
authorize, by a usage service on the cloud platform, the user, authenticated by the identity provider, to access the application based on one of the subscriptions associated with the cloud identity assigned to the user;
match a system user identity with the cloud identity, which were assigned to the user;
authenticate, by an identity manager on the system, the user based on identifying a system identity which is assigned to the user, from multiple system identities matched with multiple cloud identities, in response to a determination that the system is not connected to the cloud platform; and
authorize, by a usage service on the system, the user, authenticated by the identity manager, to access the application based on one of multiple subscriptions associated with one of the multiple cloud identities matched with the system identity assigned to the user.

16. The computer program product of claim 15, wherein authenticating the user further comprises providing an access token to the application, and authorizing the user to access the application is further based on the application providing the access token.

17. The computer program product of claim 15, wherein each subscription is based on the user having at least one of an individual account or a group account subscribed to a product agreement.

18. The computer program product of claim 15, wherein the identity manager authenticating the user is further based on having received prior consent from an administrative user for the user to be authenticated by the identity manager, and the identity manager authenticating the user within an allowed time.

19. The computer program product of claim 15, wherein the program code includes further instructions to display, via a graphical user interface associated with the application, an offline mode, a date and time when an administrative user consent expires for authentication by the identity provider, and the system identifier assigned to the user, in addition to the cloud identifier assigned to the user.

20. The computer program product of claim 15, wherein the program code includes further instructions to:
cache each event initiated by the user, who was authorized by the usage service on the system, until the system is re-connected to the cloud platform, and
store each cached event to the cloud platform.

## Patentansprüche

1. System zum Ermöglichen einer Authentifizierung durch einen lokalen Identitätsanbieter, wenn eine cloudbasierte Authentifizierung nicht verfügbar ist, wobei das System Folgendes umfasst:
einen oder mehrere Prozessoren; und
ein nichtflüchtiges computerlesbares Medium, das eine Vielzahl von Anweisungen speichert, die, wenn sie ausgeführt werden, den einen oder die mehreren Prozessoren zu Folgendem veranlassen:
Bestimmen, ob ein System, welches für einen Benutzer lokal ist, mit einer Cloud-Plattform verbunden ist, als Reaktion auf das Empfangen einer Anforderung, den Benutzer zu authentifizieren;
Authentifizieren, durch einen Identitätsanbieter auf der Cloud-Plattform, des Benutzers basierend auf dem Identifizieren einer Cloud-Identität, die dem Benutzer zugewiesen ist, aus einer Vielzahl von Cloud-Identitäten, die mit Abonnements zum Zugreifen auf eine Anwendung assoziiert sind, als Reaktion auf eine Bestimmung, dass das System mit der Cloud-Plattform verbunden ist;
Autorisieren, durch einen Nutzungsdienst auf der Cloud-Plattform, des Benutzers, der durch den Identitätsanbieter authentifiziert ist, zum Zugreifen auf die Anwendung basierend auf einem der Abonnements, die mit der Cloud-Identität assoziiert sind, die dem Benutzer zugewiesen ist;
Abgleichen einer Systembenutzeridentität mit der Cloud-Identität, die dem Benutzer zugewiesen wurde;
Authentifizieren, durch einen Identitätsmanager auf dem System, des Benutzers basierend auf dem Identifizieren einer Systemidentität, die dem Benutzer zugewiesen ist, aus mehreren Systemidentitäten, die mit mehreren Cloud-Identitäten abgeglichen sind, als Reaktion auf eine Bestimmung, dass das System nicht mit der Cloud-Plattform verbunden ist; und
Autorisieren, durch einen Nutzungsdienst auf dem System, des Benutzers, der durch den Identitätsmanager authentifiziert ist, zum Zugreifen auf die Anwendung basierend auf einem von mehreren Abonnements, die mit einer der mehreren Cloud-Identitäten assoziiert sind, die mit der Systemidentität abgeglichen sind, die dem Benutzer zugewiesen ist.

2. System nach Anspruch 1, wobei das Authentifizieren des Benutzers ferner das Bereitstellen eines Zugriffstokens für die Anwendung umfasst und das Autorisieren des Benutzers zum Zugreifen auf die Anwendung ferner darauf basiert, dass die Anwendung das Zugriffstoken bereitstellt.

3. System nach Anspruch 1, wobei jedes Abonnement darauf basiert, dass der Benutzer mindestens eines von einem individuellen Konto oder einem Gruppenkonto hat, das eine Produktvereinbarung abonniert hat.

4. System nach Anspruch 1, wobei der Identitätsmanager, der den Benutzer authentifiziert, ferner darauf basiert, dass dieser eine vorherige Zustimmung von einem administrativen Benutzer empfangen hat, dass der Benutzer durch den Identitätsmanager authentifiziert wird.

5. System nach Anspruch 4, wobei der Identitätsmanager, der den Benutzer authentifiziert, zusätzlich darauf basiert, dass der Identitätsmanager den Benutzer innerhalb einer erlaubten Zeit authentifiziert.

6. System nach Anspruch 1, wobei die Vielzahl von Anweisungen ferner den Prozessor veranlasst, über eine grafische Benutzerschnittstelle, die mit der Anwendung assoziiert ist, einen Offline-Modus, ein Datum und eine Zeit, wann eine administrative Benutzerzustimmung zur Authentifizierung durch den Identitätsanbieter abläuft, und die Systemkennung, die dem Benutzer zugewiesen ist, zusätzlich zu der Cloud-Kennung, die dem Benutzer zugewiesen ist, anzuzeigen.

7. System nach Anspruch 1, wobei die Vielzahl von Anweisungen ferner den Prozessor zu Folgendem veranlasst:
Zwischenspeichern jedes Ereignisses, das durch den Benutzer initiiert wurde, der durch den Nutzungsdienst auf dem System autorisiert wurde, bis das System wieder mit der Cloud-Plattform verbunden ist, und
ablegen jedes zwischengespeicherten Ereignisses auf der Cloud-Plattform.

8. Computerimplementiertes Verfahren zum Ermöglichen einer Authentifizierung durch einen lokalen Identitätsanbieter, wenn eine cloudbasierte Authentifizierung nicht verfügbar ist, wobei das computerimplementierte Verfahren Folgendes umfasst:
Bestimmen, ob ein System, welches für einen Benutzer lokal ist, mit einer Cloud-Plattform verbunden ist, als Reaktion auf das Empfangen einer Anforderung, den Benutzer zu authentifizieren;
Authentifizieren, durch einen Identitätsanbieter auf der Cloud-Plattform, des Benutzers basierend auf dem Identifizieren einer Cloud-Identität, die dem Benutzer zugewiesen ist, aus einer Vielzahl von Cloud-Identitäten, die mit Abonnements zum Zugreifen auf eine Anwendung assoziiert sind, als Reaktion auf eine Bestimmung, dass das System mit der Cloud-Plattform verbunden ist;
Autorisieren, durch einen Nutzungsdienst auf der Cloud-Plattform, des Benutzers, der durch den Identitätsanbieter authentifiziert ist, zum Zugreifen auf die Anwendung basierend auf einem der Abonnements, die mit der Cloud-Identität assoziiert sind, die dem Benutzer zugewiesen ist;
Abgleichen einer Systembenutzeridentität mit der Cloud-Identität, die dem Benutzer zugewiesen wurde;
Authentifizieren, durch einen Identitätsmanager auf dem System, des Benutzers basierend auf dem Identifizieren einer Systemidentität, die dem Benutzer zugewiesen ist, aus mehreren Systemidentitäten, die mit mehreren Cloud-Identitäten abgeglichen sind, als Reaktion auf eine Bestimmung, dass das System nicht mit der Cloud-Plattform verbunden ist; und
Autorisieren, durch einen Nutzungsdienst auf dem System, des Benutzers, der durch den Identitätsmanager authentifiziert ist, zum Zugreifen auf die Anwendung basierend auf einem von mehreren Abonnements, die mit einer der mehreren Cloud-Identitäten assoziiert sind, die mit der Systemidentität abgeglichen sind, die dem Benutzer zugewiesen ist.

9. Computerimplementiertes Verfahren nach Anspruch 8, wobei das Authentifizieren des Benutzers ferner das Bereitstellen eines Zugriffstokens für die Anwendung umfasst und das Autorisieren des Benutzers zum Zugreifen auf die Anwendung ferner darauf basiert, dass die Anwendung das Zugriffstoken bereitstellt.

10. Computerimplementiertes Verfahren nach Anspruch 8, wobei jedes Abonnement darauf basiert, dass der Benutzer mindestens eines von einem individuellen Konto oder einem Gruppenkonto hat, das eine Produktvereinbarung abonniert hat.

11. Computerimplementiertes Verfahren nach Anspruch 8, wobei der Identitätsmanager, der den Benutzer authentifiziert, ferner darauf basiert, dass dieser eine vorherige Zustimmung von einem administrativen Benutzer empfangen hat, dass der Benutzer durch den Identitätsmanager authentifiziert wird.

12. Computerimplementiertes Verfahren nach Anspruch 11, wobei der Identitätsmanager, der den Benutzer authentifiziert, zusätzlich darauf basiert, dass der Identitätsmanager den Benutzer innerhalb einer erlaubten Zeit authentifiziert.

13. Computerimplementiertes Verfahren nach Anspruch 8, wobei das computerimplementierte Verfahren ferner das Anzeigen, über eine grafische Benutzerschnittstelle, die mit der Anwendung assoziiert ist, eines Offline-Modus, eines Datums und einer Zeit, wann eine administrative Benutzerzustimmung zur Authentifizierung durch den Identitätsanbieter abläuft, und der Systemkennung, die dem Benutzer zugewiesen ist, zusätzlich zu der Cloud-Kennung, die dem Benutzer zugewiesen ist, umfasst.

14. Computerimplementiertes Verfahren nach Anspruch 8, wobei das computerimplementierte Verfahren ferner Folgendes umfasst:
Zwischenspeichern jedes Ereignisses, das durch den Benutzer initiiert wurde, der durch den Nutzungsdienst auf dem System autorisiert wurde, bis das System wieder mit der Cloud-Plattform verbunden ist, und
Ablegen jedes zwischengespeicherten Ereignisses auf der Cloud-Plattform.

15. Computerprogrammprodukt, das ein nichtflüchtiges computerlesbares Medium umfasst, das einen computerlesbaren Programmcode aufweist, der darin verkörpert ist, um durch einen oder mehrere Prozessoren ausgeführt zu werden, wobei der Programmcode Anweisungen für Folgendes beinhaltet:
Bestimmen, ob ein System, welches für einen Benutzer lokal ist, mit einer Cloud-Plattform verbunden ist, als Reaktion auf das Empfangen einer Anforderung, den Benutzer zu authentifizieren;
Authentifizieren, durch einen Identitätsanbieter auf der Cloud-Plattform, des Benutzers basierend auf dem Identifizieren einer Cloud-Identität, die dem Benutzer zugewiesen ist, aus einer Vielzahl von Cloud-Identitäten, die mit Abonnements zum Zugreifen auf eine Anwendung assoziiert sind, als Reaktion auf eine Bestimmung, dass das System mit der Cloud-Plattform verbunden ist;
Autorisieren, durch einen Nutzungsdienst auf der Cloud-Plattform, des Benutzers, der durch den Identitätsanbieter authentifiziert ist, zum Zugreifen auf die Anwendung basierend auf einem der Abonnements, die mit der Cloud-Identität assoziiert sind, die dem Benutzer zugewiesen ist;
Abgleichen einer Systembenutzeridentität mit der Cloud-Identität, die dem Benutzer zugewiesen wurde;
Authentifizieren, durch einen Identitätsmanager auf dem System, des Benutzers basierend auf dem Identifizieren einer Systemidentität, die dem Benutzer zugewiesen ist, aus mehreren Systemidentitäten, die mit mehreren Cloud-Identitäten abgeglichen sind, als Reaktion auf eine Bestimmung, dass das System nicht mit der Cloud-Plattform verbunden ist; und
Autorisieren, durch einen Nutzungsdienst auf dem System, des Benutzers, der durch den Identitätsmanager authentifiziert ist, zum Zugreifen auf die Anwendung basierend auf einem von mehreren Abonnements, die mit einer der mehreren Cloud-Identitäten assoziiert sind, die mit der Systemidentität abgeglichen sind, die dem Benutzer zugewiesen ist.

16. Computerprogrammprodukt nach Anspruch 15, wobei das Authentifizieren des Benutzers ferner das Bereitstellen eines Zugriffstokens für die Anwendung umfasst und das Autorisieren des Benutzers zum Zugreifen auf die Anwendung ferner darauf basiert, dass die Anwendung das Zugriffstoken bereitstellt.

17. Computerprogrammprodukt nach Anspruch 15, wobei jedes Abonnement darauf basiert, dass der Benutzer mindestens eines von einem individuellen Konto oder einem Gruppenkonto hat, das eine Produktvereinbarung abonniert hat.

18. Computerprogrammprodukt nach Anspruch 15, wobei der Identitätsmanager, der den Benutzer authentifiziert, ferner darauf basiert, dass dieser eine vorherige Zustimmung von einem administrativen Benutzer empfangen hat, dass der Benutzer durch den Identitätsmanager authentifiziert wird, und der Identitätsmanager den Benutzer innerhalb einer erlaubten Zeit authentifiziert.

19. Computerprogrammprodukt nach Anspruch 15, wobei der Programmcode ferner Anweisungen zum Anzeigen, über eine grafische Benutzerschnittstelle, die mit der Anwendung assoziiert ist, eines Offline-Modus, eines Datums und einer Zeit, wann eine administrative Benutzerzustimmung zur Authentifizierung durch den Identitätsanbieter abläuft, und der Systemkennung, die dem Benutzer zugewiesen ist, zusätzlich zu der Cloud-Kennung, die dem Benutzer zugewiesen ist, beinhaltet.

20. Computerprogrammprodukt nach Anspruch 15, wobei der Programmcode ferner Anweisungen für Folgendes beinhaltet:
Zwischenspeichern jedes Ereignisses, das durch den Benutzer initiiert wurde, der durch den Nutzungsdienst auf dem System autorisiert wurde, bis das System wieder mit der Cloud-Plattform verbunden ist, und
ablegen jedes zwischengespeicherten Ereignisses auf der Cloud-Plattform.

## Revendications

1. Système permettant l'authentification par un fournisseur d'identité local lorsque l'authentification basée sur le cloud n'est pas disponible, le système comprenant :
un ou plusieurs processeurs ; et
un support non transitoire lisible par ordinateur stockant une pluralité d'instructions qui, lorsqu'elles sont exécutées, amènent le ou les processeurs à :
déterminer si un système, qui est local pour un utilisateur, est connecté à une plate-forme cloud, en réponse à la réception d'une demande d'authentification de l'utilisateur ;
authentifier, par un fournisseur d'identité sur la plate-forme cloud, l'utilisateur en identifiant une identité cloud attribuée à l'utilisateur, à partir d'une pluralité d'identités cloud associées à des abonnements permettant d'accéder à une application, en réponse à une détermination du fait que le système est connecté à la plate-forme cloud ;
autoriser, par un service d'utilisation sur la plate-forme cloud, l'utilisateur qui a été authentifié par le fournisseur d'identité à accéder à l'application sur la base de l'un des abonnements associés à l'identité cloud attribuée à l'utilisateur ;
faire correspondre une identité d'utilisateur système avec l'identité cloud, qui ont été attribuées à l'utilisateur ;
authentifier, par un gestionnaire d'identités sur le système, l'utilisateur en identifiant une identité système qui lui est attribuée, à partir de plusieurs identités système mises en correspondance avec plusieurs identités cloud, en réponse à une détermination du fait que le système n'est pas connecté à la plate-forme cloud ; et
autoriser, par un service d'utilisation sur le système, l'utilisateur qui a été authentifié par le gestionnaire d'identités à accéder à l'application sur la base de l'un des abonnements multiples associés à l'une des identités cloud multiples mises en correspondance avec l'identité système attribuée à l'utilisateur.

2. Système selon la revendication 1, dans lequel l'authentification de l'utilisateur comprend en outre la fourniture d'un jeton d'accès à l'application, et l'autorisation de l'utilisateur à accéder à l'application est en outre basée sur le fait que l'application fournisse le jeton d'accès.

3. Système selon la revendication 1, dans lequel chaque abonnement est basé sur le fait que l'utilisateur possède au moins un compte parmi un compte individuel ou un compte de groupe souscrit dans le cadre d'un contrat de produit.

4. Système selon la revendication 1, dans lequel l'authentification de l'utilisateur par le gestionnaire d'identités est en outre basée sur la réception du consentement préalable d'un utilisateur administratif pour que l'utilisateur soit authentifié par le gestionnaire d'identités.

5. Système selon la revendication 4, dans lequel l'authentification de l'utilisateur par le gestionnaire d'identités est en outre basée sur le fait que le gestionnaire d'identités authentifie l'utilisateur dans un laps de temps autorisé.

6. Système selon la revendication 1, dans lequel la pluralité d'instructions amène en outre le processeur à afficher, via une interface utilisateur graphique associée à l'application, un mode hors ligne, une date et une heure auxquelles un consentement d'utilisateur administratif expire pour l'authentification par le fournisseur d'identité, et l'identifiant système attribué à l'utilisateur, en plus de l'identifiant cloud attribué à l'utilisateur.

7. Système selon la revendication 1, dans laquelle la pluralité d'instructions amène en outre le processeur à :
mettre en cache chaque événement initié par l'utilisateur, qui a été autorisé par le service d'utilisation sur le système, jusqu'à ce que le système soit reconnecté à la plate-forme cloud, et
stocker chaque événement mis en cache sur la plate-forme cloud.

8. Procédé mis en œuvre par ordinateur permettant l'authentification par un fournisseur d'identité local lorsque l'authentification basée sur le cloud n'est pas disponible, le procédé mis en œuvre par ordinateur comprenant les étapes consistant à :
déterminer si un système, qui est local pour un utilisateur, est connecté à une plate-forme cloud, en réponse à la réception d'une demande d'authentification de l'utilisateur ;
authentifier, par un fournisseur d'identité sur la plate-forme cloud, l'utilisateur sur la base de l'identification d'une identité cloud attribuée à l'utilisateur, à partir d'une pluralité d'identités cloud associées à des abonnements permettant d'accéder à une application, en réponse à une détermination du fait que le système est connecté à la plate-forme cloud ;
autoriser, par un service d'utilisation sur la plate-forme cloud, l'utilisateur qui a été authentifié par le fournisseur d'identité à accéder à l'application sur la base de l'un des abonnements associés à l'identité cloud attribuée à l'utilisateur ;
faire correspondre une identité d'utilisateur système avec l'identité cloud, qui ont été attribuées à l'utilisateur ;
authentifier, par un gestionnaire d'identités sur le système, l'utilisateur en identifiant une identité système qui lui est attribuée, à partir de plusieurs identités système mises en correspondance avec plusieurs identités cloud, en réponse à une détermination du fait que le système n'est pas connecté à la plate-forme cloud ; et
autoriser, par un service d'utilisation sur le système, l'utilisateur qui a été authentifié par le gestionnaire d'identités à accéder à l'application sur la base de l'un des abonnements multiples associés à l'une des identités cloud multiples mises en correspondance avec l'identité système attribuée à l'utilisateur.

9. Procédé mis en œuvre par ordinateur selon la revendication 8, dans lequel l'authentification de l'utilisateur comprend en outre la fourniture d'un jeton d'accès à l'application, et l'autorisation de l'utilisateur à accéder à l'application est en outre basée sur le fait que l'application fournisse le jeton d'accès.

10. Procédé mis en œuvre par ordinateur selon la revendication 8, dans lequel chaque abonnement est basé sur le fait que l'utilisateur possède au moins un compte parmi un compte individuel ou un compte de groupe souscrit dans le cadre d'un contrat de produit.

11. Procédé mis en œuvre par ordinateur selon la revendication 8, dans lequel l'authentification de l'utilisateur par le gestionnaire d'identités est en outre basée sur la réception du consentement préalable d'un utilisateur administratif pour que l'utilisateur soit authentifié par le gestionnaire d'identités.

12. Procédé mis en œuvre par ordinateur selon la revendication 11, dans lequel l'authentification de l'utilisateur par le gestionnaire d'identités est en outre basée sur le fait que le gestionnaire d'identités authentifie l'utilisateur dans un laps de temps autorisé.

13. Procédé mis en œuvre par ordinateur selon la revendication 8, le procédé mis en œuvre par ordinateur comprend en outre l'affichage, via une interface utilisateur graphique associée à l'application, d'un mode hors ligne, d'une date et d'une heure auxquelles un consentement d'utilisateur administratif expire pour l'authentification par le fournisseur d'identité, et de l'identifiant système attribué à l'utilisateur, en plus de l'identifiant cloud attribué à l'utilisateur.

14. Procédé mis en œuvre par ordinateur selon la revendication 8, le procédé mis en œuvre par ordinateur comprenant en outre les étapes consistant à :
mettre en cache chaque événement initié par l'utilisateur, qui a été autorisé par le service d'utilisation sur le système, jusqu'à ce que le système soit reconnecté à la plate-forme cloud, et
stocker chaque événement mis en cache sur la plate-forme cloud.

15. Produit-programme informatique, comprenant un support non transitoire lisible par ordinateur dans lequel est incorporé un code de programme lisible par ordinateur devant être exécuté par un ou plusieurs processeurs, le code de programme comprenant des instructions permettant de :
déterminer si un système, qui est local pour un utilisateur, est connecté à une plate-forme cloud, en réponse à la réception d'une demande d'authentification de l'utilisateur ;
authentifier, par un fournisseur d'identité sur la plate-forme cloud, l'utilisateur en identifiant une identité cloud attribuée à l'utilisateur, à partir d'une pluralité d'identités cloud associées à des abonnements permettant d'accéder à une application, en réponse à une détermination du fait que le système est connecté à la plate-forme cloud ;
autoriser, par un service d'utilisation sur la plate-forme cloud, l'utilisateur qui a été authentifié par le fournisseur d'identité à accéder à l'application sur la base de l'un des abonnements associés à l'identité cloud attribuée à l'utilisateur ;
faire correspondre une identité d'utilisateur système avec l'identité cloud, qui ont été attribuées à l'utilisateur ;
authentifier, par un gestionnaire d'identités sur le système, l'utilisateur en identifiant une identité système qui lui est attribuée, à partir de plusieurs identités système mises en correspondance avec plusieurs identités cloud, en réponse à une détermination du fait que le système n'est pas connecté à la plate-forme cloud ; et
autoriser, par un service d'utilisation sur le système, l'utilisateur qui a été authentifié par le gestionnaire d'identités à accéder à l'application sur la base de l'un des abonnements multiples associés à l'une des identités cloud multiples mises en correspondance avec l'identité système attribuée à l'utilisateur.

16. Produit-programme informatique selon la revendication 15, dans lequel l'authentification de l'utilisateur comprend en outre la fourniture d'un jeton d'accès à l'application, et l'autorisation de l'utilisateur à accéder à l'application est en outre basée sur le fait que l'application fournisse le jeton d'accès.

17. Produit-programme informatique selon la revendication 15, dans lequel chaque abonnement est basé sur le fait que l'utilisateur possède au moins un compte parmi un compte individuel ou un compte de groupe souscrit dans le cadre d'un contrat de produit.

18. Produit-programme informatique selon la revendication 15, dans lequel l'authentification de l'utilisateur par le gestionnaire d'identités est en outre basée sur la réception du consentement préalable d'un utilisateur administratif pour que l'utilisateur soit authentifié par le gestionnaire d'identités, et le fait que le gestionnaire d'identités authentifie l'utilisateur dans un laps de temps autorisé.

19. Produit-programme informatique selon la revendication 15, dans lequel le code de programme comprend en outre des instructions permettant d'afficher, via une interface utilisateur graphique associée à l'application, un mode hors ligne, une date et une heure auxquelles un consentement d'utilisateur administratif expire pour l'authentification par le fournisseur d'identité, et l'identifiant système attribué à l'utilisateur, en plus de l'identifiant cloud attribué à l'utilisateur.

20. Produit-programme informatique selon la revendication 15, dans lequel le code de programme comprend des instructions supplémentaires permettant de :
mettre en cache chaque événement initié par l'utilisateur, qui a été autorisé par le service d'utilisation sur le système, jusqu'à ce que le système soit reconnecté à la plate-forme cloud, et
stocker chaque événement mis en cache sur la plate-forme cloud.
